# EUROPÄISCHE PATENTSCHRIFT

(11) **EP 4 384 939 B1**
(45) Veröffentlichungstag und Bekanntmachung des Hinweises auf die Patenterteilung: **25.12.2024**
(21) Anmeldenummer: 23801707.3
(22) Anmeldetag: 02.11.2023
(51) Int. Cl.: G06N 3/067, G06N 3/044, G06N 3/049, G06E 3/00

(54) **PHOTONISCHER RESERVOIRCOMPUTER**
PHOTONIC RESERVOIR COMPUTER
ORDINATEUR À RÉSERVOIR PHOTONIQUE

(30) Priorität: 03.11.2022 DE 102022129111
(43) Veröffentlichungstag der Anmeldung: 19.06.2024
(73) Patentinhaber: AMO GmbH, 52074 Aachen (DE)
(72) Erfinder: SUCKOW, Stephan, 52078 Aachen (DE); THOMAS, Rijil, 52070 Aachen (DE); CEGIELSKI, Piotr, 81379 München (DE)
(74) Vertreter: Patentanwälte Bauer Vorberg Kayser
(86) Internationale Anmeldenummer: PCT/EP2023/080551
(87) Internationale Veröffentlichungsnummer: WO 2024/094792

(56) Entgegenhaltungen:
- WO-A1-2018/219838
- US-A1- 2022 044 100
- SACHER WESLEY D ET AL: "Monolithically Integrated Multilayer Silicon Nitride-on-Silicon Waveguide Platforms for 3-D Photonic Circuits and Devices", PROCEEDINGS OF THE IEEE, IEEE. NEW YORK, US, vol. 106, no. 12, 1 December 2018 (2018-12-01), pages 2232 - 2245, XP011697707, ISSN: 0018-9219, [retrieved on 20181119], DOI: 10.1109/JPROC.2018.2860994
- KRISTOF VANDOORNE ET AL: "Toward optical signal processing using Photonic Reservoir Computing", OPTICS EXPRESS, vol. 16, no. 15, 21 July 2008 (2008-07-21), US, pages 11182, XP055255962, ISSN: 2161-2072, DOI: 10.1364/OE.16.011182
- SUN WENXUAN ET AL: "3D Reservoir Computing with High Area Efficiency (5.12 TOPS/mm2) Implemented by 3D Dynamic Memristor Array for Temporal Signal Processing", 2022 IEEE SYMPOSIUM ON VLSI TECHNOLOGY AND CIRCUITS (VLSI TECHNOLOGY AND CIRCUITS), IEEE, 12 June 2022 (2022-06-12), pages 222 - 223, XP034154321, DOI: 10.1109/VLSITECHNOLOGYANDCIR46769.2022.9830310
- LUGNAN A ET AL: "Photonic neuromorphic information processing and reservoir computing", APL PHOTONICS, AMERICAN INSTITUTE OF PHYSICS, 2 HUNTINGTON QUADRANGLE, MELVILLE, NY 11747, vol. 5, no. 2, 4 February 2020 (2020-02-04), XP012244368, DOI: 10.1063/1.5129762

## Beschreibung

Die vorliegende Erfindung betrifft einen photonischen Reservoircomputer.

Reservoir-Computing ist ein aus der Theorie der rekurrenten neuronalen Netze abgeleitetes Datenverarbeitungsmodell (Framework), das Eingangssignale durch die Dynamik eines festen nichtlinearen Systems, des sogenannten Reservoirs, in höherdimensionale Berechnungsräume abbildet.

Ein Reservoircomputer umfasst drei grundlegende Teile: a) Die Eingabeschicht, die das Eingangssignal in ein nichtlineares dynamisches System einkoppelt, b) das "Reservoir", d. h. das rekurrente neuronale Netz, das statisch ist und nicht trainiert wird, und c) die Ausgabeschicht, die normalerweise die Zustände des Reservoirs linear kombiniert, um das zeitabhängige Ausgangssignal zu liefern.

Das Reservoir umfasst Knoten (in der Graphentheorie auch Ecken genannt) bzw. Neuronen, sowie Verbindungen (auch als Kanten bezeichnet), entsprechend den zugehörigen Synapsen, zwischen den Knoten. Der Zustand eines jeden Knotens kann als Funktion der Eingangsgrößen an den Eingangsverbindungen bzw. den entsprechenden Zuständen der benachbarten (verbundenen) Knoten verstanden werden.

Um das Reservoir zur Lösung einer bestimmten Aufgabe zu nutzen, wird maschinelles Lernen verwendet, um einen Satz von Gewichtungsfaktoren in der Ausgabeschicht anhand eines Satzes von Beispiel- bzw. Trainingsdaten so zu trainieren, dass eine Kombination der an den Ausgabeknoten aufgezeichneten optischen Signale eine zu den Beispiel- bzw. Trainingsdaten zugehörige Sollausgabe so gut wie möglich annähert. Diese während des Trainings ermittelten Gewichtungsfaktoren werden dann verwendet, um auch das Ausgangssignal für die tatsächlichen Eingangssignale zu erzeugen. Reservoircomputer können nach dem Training im Gebrauch ein globales Optimum annähern, ohne dass dafür eine zeitaufwändige iterative Methode erforderlich ist. Reservoircomputer haben sich dadurch bei einer Reihe komplexer Aufgaben mit zeitabhängigen Daten als sehr leistungsfähig erwiesen.

Zusammenfassend wird im Rahmen des Trainings des Reservoircomputers lediglich ein Auslesemechanismus trainiert, um den Zustand des Reservoirs zu erfassen und diesen Zustand auf die gewünschte Ausgabe abzubilden. Das Reservoir selbst wird bei diesem Trainingsansatz nicht verändert. Beim Reservoir handelt es sich dabei im Wesentlichen um ein unveränderliches Verteilungsnetz. In diesem durchläuft das Eingangssignal das neuronale Netz über mehrere Bits (im Sinne eines digitalen Input-Streams), wodurch sich im Netzwerk gleichzeitig ein Inter-Bit-Speicher ausbildet.

Der Hauptvorteil des Reservoir-Computing-Frameworks besteht also mitunter darin, dass das Training des neuronalen Netzes nur in der Ausgabeschicht durchgeführt wird und die Reservoir-Dynamik fix ist. Reservoir-Computing ist deshalb besonders geeignet, um in Hardware-Applikationen genutzt zu werden.

Mit optischen Reservoir-Computing-Netzwerken, bzw. photonischen Reservoircomputern lassen sich besonders hohe Bandbreiten und große Signalverarbeitungsgeschwindigkeiten erzielen. Einen grundlegenden Überblick zum photonischen Reservoir-Computing findet sich beispielsweise in "Katumba et al., IEEE J. Sel. Top. Quantum Electron. 24, 1-10 (2018), https://doi.org/10. 1063/1.5129762".

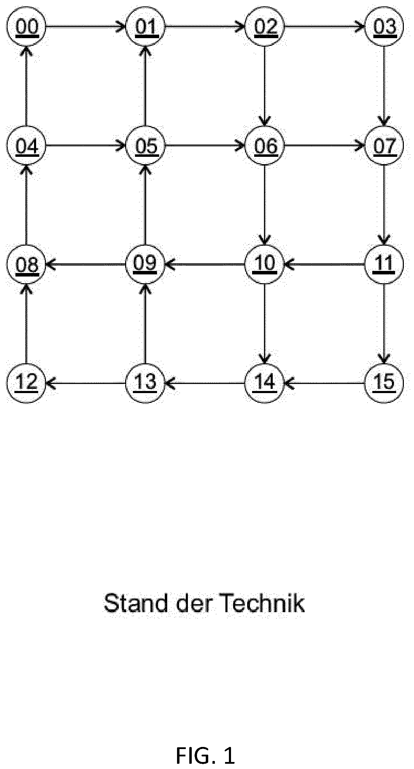

Die vorbekannten photonischen Reservoircomputer mit integrierten Wellenleitern sind auf planare Topologien beschränkt. Bekannte Topologien sind beispielhaft in FIG. 1 gezeigt.

Als weiterer Stand der Technik sei auf die WO 2018/219838 A1 verwiesen, in der ein Photonischer Reservoircomputer, umfassend einen oder mehrere Eingabeknoten, mehrere Reservoirknoten, und einen oder mehrere Ausgabeknoten, wobei die Eingabe-, die Reservoir- und Ausgabeknoten photonisch mittels Wellenleitern signalübertragend vermascht gekoppelt sind, offenbart wird.

Eine der durch die Erfindung zu lösenden Aufgaben liegt darin, einen verbesserten photonischen Reservoircomputer bereitzustellen, der eine größere Flexibilität in der Nutzung aufweist und/oder komplexere Funktionen ausführen kann.

Zur Lösung oben genannter Aufgaben wird ein photonischer Reservoircomputer mit den Merkmalen des Anspruchs 1 vorgeschlagen.

Der vorgeschlagene photonische Reservoircomputer umfasst eine Eingabeschicht, die einen oder mehrere Eingabeknoten aufweist, eine Reservoirschicht, die mehrere Reservoirknoten umfasst, und eine Ausgabeschicht, die einen oder mehrere Ausgabeknoten enthält. Eingabe-, Reservoir- und Ausgabeschicht sind dabei nicht zwingend als tatsächliche Schichten in einem geschichteten Aufbau zu verstehen, vielmehr handelt es sich in den meisten Ausführungsbeispielen lediglich um eine funktionale Einteilung und Zuordnung der einzelnen Knoten.

Die Eingabeknoten, die Reservoirknoten und die Ausgabeknoten sind photonisch mittels Wellenleitern optisch kommunizierend gekoppelt und bilden ein vermaschtes Netz aus. Die Wellenleiter können in einem (optischen) Chip integriert sein oder beispielsweise Glasfasern umfassen.

Als "gekoppelt" werden solche Knoten bezeichnet, bei denen der Ausgang eines Knotens mit dem Eingang eines anderen Knotens mittels eines Wellenleiters oder mehrerer Wellenleiter informationsübertragend direkt oder indirekt (also über einen oder mehrere zwischenliegende Knoten) verbunden sind. Als "topologisch benachbart", "direkt verbunden" bzw. verkürzt einfach "verbunden" werden folglich solche Knoten bezeichnet, bei denen der Ausgang eines Knotens mit dem Eingang eines weiteren Knotens mittels eines Wellenleiters informationsübertragend und direkt, also ohne einen zwischenliegenden Knoten, verbunden sind.

Reservoirknoten sind Knoten des Reservoirnetzwerkes, die jeweils zumindest einen Eingang und einen Ausgang aufweisen, an denen sie mit weiteren Knoten mittels Wellenleitern verbunden sind. Durch nichtlineare Effekte und Interferenzen verändert sich das optische Signal während es von Reservoirknoten zu Reservoirknoten durch das Reservoirnetzwerk propagiert.

Eingabeknoten sind dadurch definiert, dass sie zumindest einen Eingang aufweisen, an dem ein optisches Eingangssignal in das Reservoirnetzwerk eingekoppelt wird.

Als Ausgabeknoten werden wiederum solche Knoten bezeichnet, an denen das Signal ausgelesen, gewichtet und zur Weiterverarbeitung bereitgestellt wird.

Erfindungsgemäß überspannen oder kreuzen zumindest einige der Wellenleiter andere der Wellenleiter und/oder der Reservoirknoten in einer nichtplanaren Weise. Dabei sind die überspannenden Wellenleiter räumlich über oder unter dem überspannten

Wellenleiter bzw. Reservoirknoten angeordnet. Sich kreuzende Wellenleiter wiederum weisen einen gemeinsamen Abschnitt auf, welcher dem Licht- bzw. Informationstransport beider Wellenleiter dient. In Worten der Graphen-Theorie ist die Topologie des Netzwerkes also nicht-planar.

In anderen Worten sieht die Erfindung vor, dass Reservoirknoten auch mit weiteren Reservoirknoten direkt verbunden werden, die bei einer planaren Topologie nicht zu den räumlich direkt umliegenden/benachbarten Reservoirknoten gehören. Durch die überspannenden/kreuzenden Wellenleiter wird demnach ein drei- oder höherdimensionales Netzwerk bzw. eine höherdimensionale Vernetzungstopologie ausgebildet, selbst dann, wenn die Reservoirknoten, beispielsweise aus Fertigungsgründen, in einer zweidimensionalen Ebene angeordnet sind.

Aufgrund der hohen Ausbreitungsgeschwindigkeit von Licht kann dabei die Längendifferenz der Verbindung durch die überspannenden/kreuzenden Wellenleiter im Vergleich zu den Verbindungen zu direkt benachbarten Knoten regelmäßig vernachlässigt werden. Sie fällt nur unwesentlich ins Gewicht. Im Bedarfsfall können längere Wellenleiterverbindungen allerdings optional auch durch dementsprechend kürzer ausgelegte Verzögerungsstrecken kompensiert werden, die so dimensioniert sind, dass sich vergleichbare Laufzeiten wie zu direkt benachbarten Knoten ergeben.

Je mehr Knoten ein Eingangssignal in einem optischen Reservoir-Computing-Netzwerk erreicht, desto komplexer kann das aus dem Eingangssignal resultierende Interferenzmuster an den Ausgängen werden.

Gleichzeitig wird das Eingangssignal an jedem Reservoirknoten auf die jeweiligen Ausgänge des Knotens aufgeteilt. Sofern der Reservoirknoten als passives optisches Bauteil ausgebildet ist, also insbesondere keinen Verstärker aufweist, der das Signal verstärkt an den Ausgängen ausgibt, nimmt die Intensität mit jedem weiteren Knoten, den das Signal im Netzwerk durchläuft, stark ab. Daher ist das Signal bereits nach dem Durchlauf weniger Knotenpunkte so weit abgeklungen, dass sich das Interferenzmuster durch die nachfolgenden Reservoirknoten nicht mehr wesentlich verändert. Dies begrenzt die Komplexität der Aufgaben, die mittels photonischen Reservoircomputern ohne On-Chip-Verstärker gelöst werden können.

Die Erfindung ermöglicht eine homogenere Verteilung des Eingangssignals über das gesamte Netzwerk und daraus resultierend durch die sich ausbildenden komplexeren Interferenzmuster eine größere Komplexität in den durch den Reservoircomputer zu lösenden Aufgaben.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Weitere vorteilhafte Ausgestaltungen erfindungsgemäßer photonischer Reservoircomputer ergeben sich aus den in den Unteransprüchen angegebenen sowie den nachfolgend beschriebenen Merkmalen.

Bevorzugt können eine Mehrzahl der Reservoirknoten jeweils zumindest einen ersten und einen zweiten mittels Wellenleitern verbundenen topologischen Nachbarknoten aufweisen. Der erste topologische Nachbarknoten kann räumlich zu dem jeweiligen Reservoirknoten unmittelbar benachbart angeordnet sein, während der zweite topologische Nachbarknoten räumlich derart beabstandet von dem zugehörigen Reservoirknoten angeordnet ist, dass zwischen dem jeweiligen Reservoirknoten und dem zweiten topologischen Nachbarknoten zumindest ein zwischenliegender Knoten liegt. Der zwischenliegende Knoten ist dabei bevorzugt kein topologischer Nachbarknoten des jeweiligen Reservoirknotens. Diese Anordnung erlaubt eine homogenere Verteilung des Eingangssignals über die Reservoirschicht und damit komplexere Interferenzmuster an den Ausgangsknoten.

In mehreren Ausführungsvarianten weisen die Reservoirknoten jeweils kumuliert zwischen zwei und sieben Ein- und Ausgänge auf. Bevorzugt weisen die Reservoirknoten kumuliert jeweils zwischen drei und fünf Ein- und Ausgänge auf.

Die Reservoirknoten können jeweils zwischen einem und fünf Eingänge sowie zwischen einem und fünf Ausgänge aufweisen. Vorzugsweise umfassen die Reservoirknoten jeweils zwischen einem und vier Eingängen sowie zwischen einem und vier Ausgängen, bevorzugt zwischen ein und drei Eingängen sowie zwischen ein und drei Ausgängen. Besonders bevorzugt können die Reservoirknoten zwei oder drei Ausgänge aufweisen.

In anderen Worten kann der Grad der Knoten, also die Anzahl der zugehörigen adjazenten Kanten, beispielsweise bevorzugt zwischen zwei und sieben, zwischen drei und fünf und insbesondere bei vier liegen. Besonders vorteilhaft, beispielsweise effizient, arbeitet das Netz, wenn alle Knoten den gleichen Grad aufweisen.

Eine höhere Anzahl an Ein- und insbesondere Ausgängen führt zu einem starken Intensitätsverlust des optischen Signals während der Ausbreitung durch das Netzwerk. Zwar steigt mit der Anzahl der Ein- und Ausgänge grundsätzlich die Anzahl der Verbindungen zwischen den Knoten und daraus resultierend sinkt durchschnittlich die Anzahl der Knoten, über die das optische Signal von den Eingabeknoten in Richtung der Ausgabeknoten transportiert werden muss. Allerdings sinkt die Intensität des optischen Signals mit jedem Knoten derart stark, dass schon nach wenigen Knoten die Intensität des Signals unter das Grundrauschen fällt und eine sinnvolle Auswertung des Signals unmöglich wird.

In vorteilhaften Ausführungsformen weist die Mehrzahl der Reservoirknoten jeweils zwei Eingänge und zwei Ausgänge auf. Dabei können jeweils einer der Eingänge und/oder einer der Ausgänge eines Reservoirknotens mittels Wellenleitern direkt mit räumlich benachbarten Reservoirknoten verbunden sein, während bevorzugt der zweite Eingang und/oder der zweite Ausgang des Reservoirknotens mit räumlich weiter entfernten Reservoirknoten verbunden ist. Auf diese Weise wird das optische (Eingangs-)signal homogener bzw. weiter innerhalb des Netzwerks von Reservoirknoten verteilt.

Die Reservoirknoten können paarweise direkt oder über eine minimale Anzahl von zwischenliegenden Reservoirknoten miteinander gekoppelt sein, wobei die minimale Anzahl der zwischenliegenden Reservoirknoten bevorzugt maximal der Wurzel der Anzahl der insgesamt vorhandenen Reservoirknoten entspricht. In anderen Worten weist die Reservoirschicht eine Topologie mit vergleichsweise geringem Durchmesser auf.

In einigen Ausführungsvarianten weist der Reservoircomputer eine integrierte Optik auf. Die integrierte Optik umfasst zumindest die Reservoirknoten. Die integrierte Optik kann aber auch die Eingabe- und/oder Ausgabeknoten sowie die Wellenleiter umfassen. Die integrierte Optik kann einen photonischen integrierten Schaltkreis, einen sogenannten "Photonic Integrated Circuit" bzw. PIC, ausbilden. Als integrierte Optik kann der Reservoircomputer besonders klein und in größeren Stückzahlen auch sehr ökonomisch gefertigt werden.

Gemäß eines weiteren vorteilhaften Aspekt kann der Reservoircomputer einen optischen Interposer umfassen. Der optische Interposer kann Wellenleiter zum Koppeln der Eingabe-, Reservoir- und/oder Ausgabeknoten aufweisen. Der optische Interposer kann ein Glas-Interposer sein. Ein optischer Interposer kann genutzt werden, um einen photonischen integrierten Schaltkreis an weitere optische und/oder elektrische Komponenten anzubinden. Durch einen optischen Interposer können mehrere photonische integrierte Schaltkreise miteinander kommunizierend gekoppelt und mechanisch verbunden werden.

Optional kann die Mehrzahl der Reservoirknoten keine optischen Verstärker aufweisen. Bevorzugt kann die Mehrzahl der Reservoirknoten nur passive optische Elemente aufweisen.

Für bestimmte Aufgaben kann die Reservoirschicht mit einem vollständig passiven linearen Netzwerk, d. h. einem Netzwerk ohne Verstärkung oder nichtlineare Elemente, umgesetzt sein. Die erforderliche Nichtlinearität wird dann am Auslesepunkt eingeführt, typischerweise mit einem Photodetektor.

Neben der geringeren Komplexität bei der Herstellung und den sich ergebenden Kostenvorteilen ist ein weiterer Vorteil einer solchen passiven Architektur der sehr geringe Stromverbrauch, da die Berechnung selbst keine externe Energie benötigt. Gemäß eines weiteren vorteilhaften Aspekts kann der Reservoircomputer eine Mehrzahl von Eingabeknoten aufweisen. Die Eingabeknoten können verteilt zwischen den Reservoirknoten im Netzwerk angeordnet sein. Zusätzlich kann der Reservoircomputer einen Strahlteiler aufweisen. Der Strahlteiler kann ausgebildet sein, um ein optisches Eingangssignal auf die Eingabeknoten aufzuteilen.

In diesen Zeichnungen zeigen schematisch:
- FIG. 1: eine bekannte Topologie für optische Reservoir-Computing-Netzwerke;
- FIG. 2: eine weitere bekannte Topologie für optische Reservoir-Computing-Netzwerke;
- FIG. 3: eine Topologie für einen erfindungsgemäßen Reservoircomputer;
- FIG. 4: eine weitere Topologie für einen erfindungsgemäßen Reservoircomputer;
- FIG. 5: eine alternative Topologie für einen erfindungsgemäßen Reservoircomputer;
- FIG. 6: eine weitere alternative Topologie für einen erfindungsgemäßen Reservoircomputer;
- FIG. 7: noch eine alternative Topologie für einen erfindungsgemäßen Reservoircomputer; und
- FIG. 8: einen photonischen Reservoircomputer gemäß einem Ausführungsbeispiel der Erfindung.

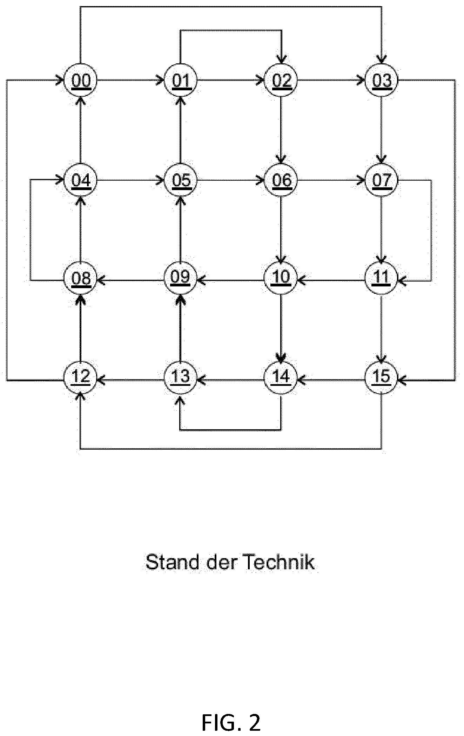

Die FIG. 1 und FIG. 2 zeigen bekannte Topologien für photonische Reservoircomputer aus dem Stand der Technik. Die in FIG. 1 gezeigte Topologie ist auch als Swirl-Architektur bekannt. Die in FIG. 2 gezeigte Topologie wird als Vier-Port-Architektur bezeichnet.

Die Pfeilspitzen der Verbindungen zwischen den Knoten deuten die grundsätzliche Richtung des Informationsflusses an. Dabei ist allerdings zu beachten, dass Wellenleiter üblicherweise bi-direktional wirken, sich also in Abhängigkeit der Konfiguration der Reservoirknoten und der Wahl der Eingangsknoten Informationsflüsse auch umkehren können oder sogar gleichzeitig in beide Richtungen stattfinden.

Zur Anwendung kommen in beiden Fällen, also sowohl bei der Swirl-Architektur wie auch bei der Vier-Port-Architektur, zweidimensionale Maschentopologien, in welcher die Reservoirknoten immer nur mit den jeweils nächsten bzw. umliegenden Reservoirknoten verbunden sind. Diese Art von Topologie wird auch planare Topologie genannt.

Die Swirl-Architektur hat den Nachteil, dass sie Knoten enthält, die nicht symmetrisch sind. Daher leiden diese Knoten unter modaler Strahlung an jedem 2×1-Kombinator. Die Abstrahlungsverluste lassen sich in diesen Singlemode-Kombinatoren nicht vermeiden, und über die verschiedenen Eingangsphasen gemittelt, strahlen dort 50 % der Leistung ab.

Wenn man sich auf das Mischverhalten der Swirl-Architektur konzentriert, gibt es außerdem einige Knoten, die nicht wesentlich zur Dynamik beitragen. So spielen beispielsweise die Knoten 00, 03, 12, 15 in den Ecken nur eine sehr begrenzte Rolle bei der Verteilung des Eingangssignals im Reservoir, da sie im Grunde nur Verzögerungsleitungen sind, die die Leistung nur an einen anderen Knoten weiterverteilen.

Ebenso tragen die anderen Knoten 01, 02, 04, 07, 08, 11, 13 und 14 am Rand des Reservoirs, die eine geringere Zahl von Nachbarknoten haben, weniger zur Verteilung des Eingangssignals bei als die Knoten 05, 06, 09, 10 in der Mitte.

Um die beiden Probleme der Verluste und der Vermischung zu lösen, wurde daher die so genannte Vier-Port-Architektur aus FIG. 2 eingeführt. Bei dieser Architektur werden die verlustbehafteten 2×1-Kombinatoren vermieden und stattdessen nur 2×2-Bauelemente verwendet, und es werden zusätzliche Wellenleiter hinzugefügt, um die Durchmischung zu erhöhen. Simulationen dieser Architektur mit vier Anschlüssen für ein Netz mit 64 Knoten zeigen, dass die Verluste um eine Größenordnung geringer sein können als bei der Swirl-Architektur. Diese Simulationen zeigen auch, dass die Leistung gleichmäßiger über das Reservoir verteilt ist als bei der Swirl-Architektur.

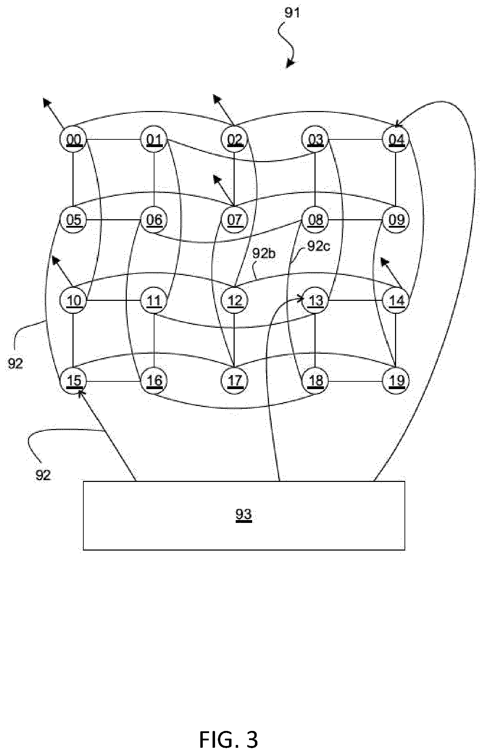

In FIG. 3 ist eine nicht-planare Topologie für einen erfindungsgemäßen Reservoircomputer 91 gezeigt. Sie umfasst einen oder mehrere Eingabeknoten 04, 13, 15, mehrere Reservoirknoten 00-24 und einen oder mehrere Ausgabeknoten 00, 02, 07, 10, 14.

Die Ausgabeknoten sind in FIG. 3 jeweils durch vom Knoten wegzeigende Pfeile angedeutet. Dabei ist aber zu beachten, dass die Position und/oder Gewichtung der Ausgabeknoten während des Trainings aufgabenspezifisch ausgewählt werden können. Grundsätzlich kommen alle Reservoirknoten 00-24 als Ausgabeknoten in Betracht, solange sie einen entsprechenden Ausgang aufweisen.

Die Eingabeknoten 04, 15, 17 sind in FIG. 3 dadurch zu erkennen, dass sie aus einem schematisch dargestellten optionalen Strahlteiler 93 mit dem Eingangssignal gespeist werden. Auch bei den Eingabeknoten kann es sich im Wesentlichen um beliebige Reservoirknoten 00-24 handeln, die einen entsprechenden freien Eingang für das Eingangssignal aufweisen. Die Eingabeknoten 04, 15, 17 sind dabei verteilt zwischen den Reservoirknoten angeordnet, um das Eingangssignal an verschiedenen Punkten der Reservoirschicht bzw. des Reservoirs in das Reservoirnetzwerk einzuspeisen. Aus Gründen der besseren Übersicht werden Ein- und Ausgabeknoten in den nachfolgenden Figuren nicht mehr gesondert kenntlich gemacht. Die hier beschriebene Lehre kann aber ohne weiteres auf die anderen gezeigten Topologien übertragen werden.

Die Eingabe-, die Reservoir- und Ausgabeknoten 00-24 sind photonisch mittels Wellenleitern 92, 92b, 92c signalübertragend vermascht gekoppelt. Erfindungsgemäß überspannt dabei zumindest einer der Wellenleiter 92b zumindest einen anderen der Wellenleiter 92c und/oder zumindest einen der Reservoirknoten 00-24.

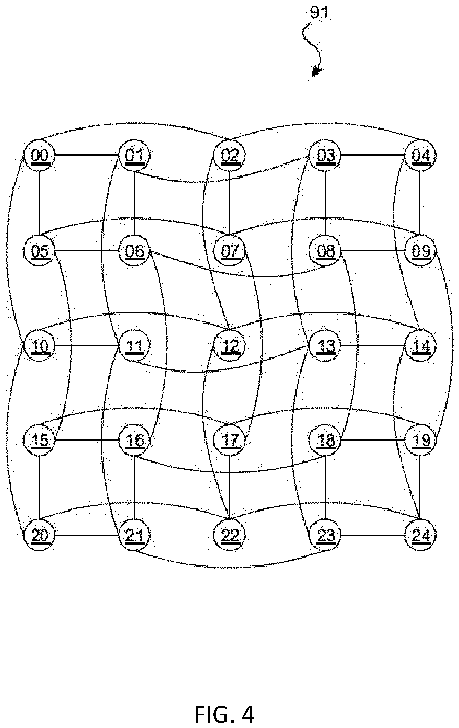

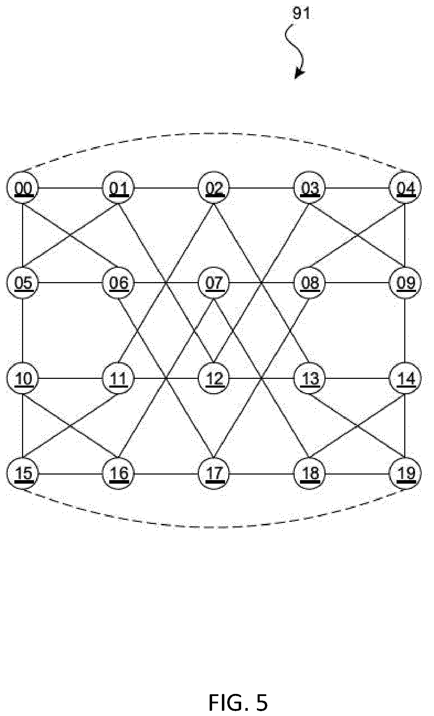

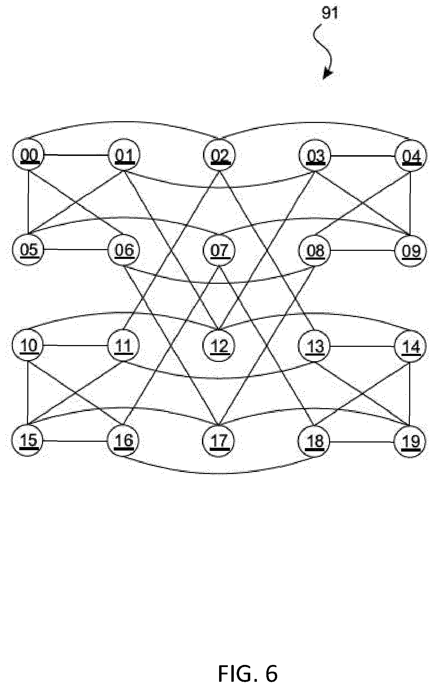

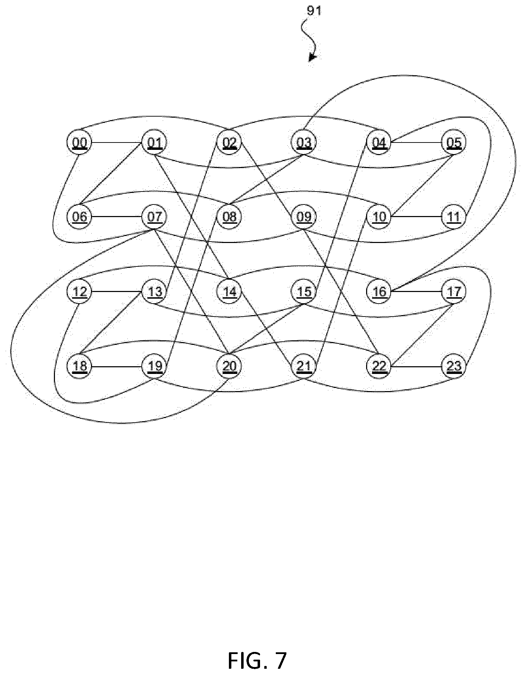

Wie auch in den nachfolgenden Figuren FIG. 4 bis FIG. 8 weisen eine Mehrzahl der Reservoirknoten 00-24 in FIG. 3 jeweils zumindest einen ersten und einen zweiten mittels Wellenleitern verbundenen topologischen Nachbarknoten auf. Beispielhaft soll die Topologie anhand eines beliebigen Reservoirknotens 07 in FIG. 3 näher beschrieben werden.

Der erste topologische Nachbarknoten 02 ist dabei räumlich zu dem jeweiligen Reservoirknoten 07 unmittelbar benachbart angeordnet. Der zweite topologische Nachbarknoten 17 ist räumlich derart beabstandet von dem jeweiligen Reservoirknoten angeordnet, dass zwischen dem jeweiligen Reservoirknoten 07 und dem zweiten topologischen Nachbarknoten 17 zumindest ein zwischenliegender Knoten 12 liegt. Der zwischenliegende Knoten 12 ist dabei kein topologischer Nachbarknoten des jeweiligen Reservoirknotens 07.

Gemeinhin sind hinreichend viele Knoten im Reservoircomputer 91 vorhanden, um die genannten überspannenden oder kreuzenden Verbindungen zu realisieren.

Die Reservoirknoten 00-24 weisen jeweils kumuliert zwischen zwei und sieben Ein- und Ausgänge auf, insbesondere umfassen die Reservoirknoten 00-24 kumuliert jeweils zwischen drei und fünf Ein- und Ausgänge.

Dabei umfassen die Reservoirknoten 00-24 jeweils zwischen einem und fünf Eingängen sowie zwischen einem und fünf Ausgängen bzw. jeweils zwischen einem und vier Eingängen sowie zwischen einem und vier Ausgängen. Bevorzugt weisen die Reservoirknoten 00-24 zwischen ein und drei Eingänge sowie zwischen ein und drei Ausgänge auf. Konkret umfassen die Reservoirknoten zwei oder drei Ausgänge.

Eine Mehrzahl der Reservoirknoten 00-24 umfassen jeweils zwei Eingänge und zwei Ausgänge. Dabei ist jeweils einer der Eingänge und/oder einer der Ausgänge eines Reservoirknotens mit räumlich benachbarten Reservoirknoten mittels Wellenleitern 92 verbunden. Der zweite Eingang und/oder der zweite Ausgang des Reservoirknotens ist wiederum mittels Wellenleitern mit räumlich weiter entfernten Reservoirknoten verbunden.

Dabei sind die Reservoirknoten 00-24 jeweils paarweise direkt oder über eine minimale Anzahl von zwischenliegenden Reservoirknoten miteinander gekoppelt. Die minimale Anzahl der zwischenliegenden Reservoirknoten entspricht bevorzugt maximal der Wurzel der Anzahl der insgesamt vorhandenen Reservoirknoten.

Die Topologien der Figuren FIG. 3 bis FIG. 7 unterscheiden sich lediglich darin, welche Reservoirknoten im speziellen verbunden werden. Je nach Anwendungszweck kann die eine oder andere Topologie vorzuziehen sein.

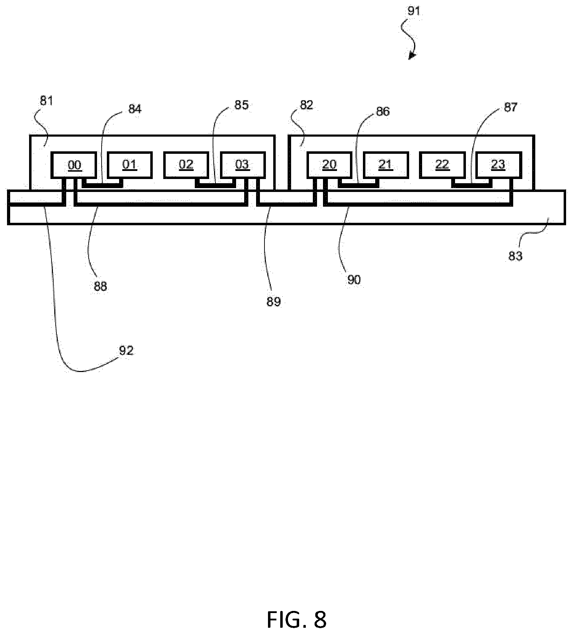

FIG. 8 zeigt einen Reservoircomputer 91 in einer stark vereinfachten Schnittansicht. Der Reservoircomputer weist dabei eine erfindungsgemäße Topologie, wie etwa in einer der Figuren FIG. 3 bis FIG. 7 gezeigt, auf.

Der Reservoircomputer 91 umfasst zumindest eine integrierte Optik 81, 82. Die integrierte Optik beinhaltet zumindest die Reservoirknoten 00-24. Dabei bildet die integrierte Optik 81, 82 einen photonischen integrierten Schaltkreis aus.

Weiterhin umfasst der Reservoircomputer 91 einen (optionalen) optischen Interposer 83. Der optische Interposer beinhaltet Wellenleiter 88-90, 92 zum Koppeln der Eingabe-, Reservoir- und/oder Ausgabeknoten 00-24.

Dadurch können Wellenleiter 84-87, 88-90 sowohl in den integrierten Optiken 82, 83 wie auch im optischen Interposer 83 geführt werden, sodass sich Wellenleiter 84/88, 85/88, 86/90, 87/90, 92b/ 92c /siehe exemplarisch auch FIG. 3) trotz planarer Anordnung der Reservoirknoten 00-24 ohne Konflikt kreuzen/überspannen können und somit ein Netzwerk mit nicht-planarer Topologie ausbilden.

Optional umfasst die Mehrzahl der Reservoirknoten 00-24 keine optischen Verstärker. Mithin weisen die Mehrzahl der Reservoirknoten 00-24 bzw. vorteilhaft sogar alle Reservoirknoten nur passive optische Elemente auf.

Das Projekt wurde mit Mitteln des Bundesministeriums für Bildung und Forschung unter dem Förderkennzeichen 16KIS1291 gefördert.

## Patentansprüche

1. Photonischer Reservoircomputer (91), umfassend einen oder mehrere Eingabeknoten (04, 13, 15), mehrere Reservoirknoten (00-24), und einen oder mehrere Ausgabeknoten (00, 02, 07, 10, 14), wobei die Eingabe-, die Reservoir- und Ausgabeknoten (00-24) photonisch mittels Wellenleitern (92, 92b, 92c) signalübertragend vermascht gekoppelt sind, **dadurch gekennzeichnet, dass** zumindest einer der Wellenleiter (92b) zumindest einen anderen der Wellenleiter (92c) und/oder zumindest einen der Reservoirknoten (00-24) nicht-planar überspannt oder kreuzt.

2. Photonischer Reservoircomputer (91) nach Anspruch 1, wobei eine Mehrzahl der Reservoirknoten (00-24) jeweils zumindest einen ersten und einen zweiten mittels Wellenleitern verbundenen topologischen Nachbarknoten aufweisen, wobei der erste topologische Nachbarknoten räumlich zu dem jeweiligen Reservoirknoten unmittelbar benachbart angeordnet ist, und wobei der zweite topologische Nachbarknoten räumlich derart beabstandet von dem jeweiligen Reservoirknoten angeordnet ist, dass zwischen dem jeweiligen Reservoirknoten und dem zweiten topologischen Nachbarknoten zumindest ein zwischenliegender Knoten liegt, insbesondere wobei der zwischenliegende Knoten kein topologischer Nachbarknoten des jeweiligen Reservoirknotens ist.

3. Photonischer Reservoircomputer (91) nach einem der vorherigen Ansprüche, wobei die Reservoirknoten (00-24) jeweils kumuliert zwischen zwei und acht Ein- und Ausgänge aufweisen, insbesondere wobei die Reservoirknoten (00-24) kumuliert jeweils zwischen drei und fünf Ein- und Ausgänge aufweisen.

4. Photonischer Reservoircomputer (91) nach einem der vorherigen Ansprüche, wobei die Reservoirknoten (00-24) jeweils zwischen einem und fünf Eingängen sowie zwischen einem und fünf Ausgängen aufweisen, insbesondere wobei die Reservoirknoten jeweils zwischen einem und vier Eingänge sowie zwischen einem und vier Ausgänge aufweisen, bevorzugt wobei die Reservoirknoten zwischen ein und drei Eingänge sowie zwischen ein und drei Ausgänge aufweisen, besonders bevorzugt wobei die Reservoirknoten zwei oder drei Ausgänge aufweisen.

5. Photonischer Reservoircomputer (91) nach einem der vorherigen Ansprüche, wobei eine Mehrzahl der Reservoirknoten (00-24) jeweils zwei Eingänge und zwei Ausgänge aufweist, insbesondere wobei jeweils einer der Eingänge und/oder einer der Ausgänge eines Reservoirknotens mit räumlich benachbarten Reservoirknoten mittels Wellenleitern (92) verbunden ist, bevorzugt wobei der zweite Eingang und/oder der zweite Ausgang des Reservoirknotens mittels Wellenleitern mit räumlich weiter entfernten Reservoirknoten verbunden ist.

6. Photonischer Reservoircomputer (91) nach einem der vorherigen Ansprüche, wobei die Reservoirknoten (00-24) paarweise direkt oder über eine minimale Anzahl von zwischenliegenden Reservoirknoten miteinander gekoppelt sind, wobei die minimale Anzahl der zwischenliegenden Reservoirknoten maximal der Wurzel der Anzahl der insgesamt vorhandenen Reservoirknoten entspricht.

7. Photonischer Reservoircomputer (91) nach einem der vorherigen Ansprüche, wobei der Reservoircomputer eine integrierte Optik (81, 82) aufweist und die integrierte Optik zumindest die Reservoirknoten (00-24) umfasst, insbesondere wobei die integrierte Optik einen photonischen integrierten Schaltkreis ausbildet.

8. Photonischer Reservoircomputer (91) nach einem der vorherigen Ansprüche, wobei der Reservoircomputer einen optischen Interposer (83) umfasst, wobei der optische Interposer Wellenleiter (88-90, 92) zum Koppeln der Eingabe-, Reservoir- und/oder Ausgabeknoten (00-24) aufweist.

9. Photonischer Reservoircomputer (91) nach einem der vorherigen Ansprüche, wobei eine Mehrzahl der Reservoirknoten (00-24) keine optischen Verstärker umfasst, insbesondere wobei die Mehrzahl der Reservoirknoten nur passive optische Elemente aufweisen.

10. Photonischer Reservoircomputer (91) nach einem der vorherigen Ansprüche, umfassend eine Mehrzahl von Eingabeknoten (04, 13, 15), wobei die Eingabeknoten verteilt zwischen den Reservoirknoten angeordnet sind, insbesondere wobei der Reservoircomputer einen Strahlteiler (93) aufweist und der Strahlteiler ausgebildet ist, um ein optisches Eingangssignal auf die Eingabeknoten (04, 13, 15) aufzuteilen.

## Claims

1. A photonic reservoir computer (91) comprising one or more input nodes (04, 13, 15), multiple reservoir nodes (00-24) and one or more output nodes (00, 02, 07, 10, 14), wherein the input nodes, reservoir nodes and output nodes (00-24) are photonic and coupled for signal transmission by means of waveguides (92, 92b, 92c), **characterized in that** at least one of the waveguides (92b) spans or crosses at least one other waveguide (92c) and/or at least one of the reservoir nodes (00-24) in a non-planar manner.

2. The photonic reservoir computer (91) according to claim 1, wherein a plurality of reservoir nodes (00-24) has at least a first and a second topological neighbouring node connected by means of waveguides, wherein the first topological neighbouring node is arranged spatially immediately adjacent to the respective reservoir node, and wherein the second topological neighbouring node is spatially arranged spaced apart from the associated reservoir node, such that at least one intermediate node lies between the respective reservoir node and the second topological neighbouring node, in particular wherein the intermediate node is not a topological neighbouring node of the respective reservoir node.

3. The photonic reservoir computer (91) according to any one of the preceding claims, wherein the reservoir nodes (00-24) each have cumulatively between two and eight inputs and outputs, in particular wherein the reservoir nodes (00-24) each have cumulatively between three and five inputs and outputs.

4. The photonic reservoir computer (91) according to any one of the preceding claims, wherein the reservoir nodes (00-24) each have between one and five inputs and between one and five outputs, in particular wherein the reservoir nodes each have between one and four inputs and between one and four outputs, more preferably wherein the reservoir nodes have between one and three inputs and between one and three outputs, particularly preferably wherein the reservoir nodes have two or three outputs.

5. The photonic reservoir computer (91) according to any one of the preceding claims, wherein a plurality of reservoir nodes (00-24) each has two inputs and two outputs, in particular wherein one of the inputs and/or one of the outputs in each case of a reservoir node is connected to spatially neighbouring reservoir nodes by means of waveguides (92), preferably wherein the second input and/or the second output of the reservoir node is connected to spatially more distant reservoir nodes by means of waveguides.

6. The photonic reservoir computer (91) according to any one of the preceding claims, wherein the reservoir nodes (00-24) are paired and directly coupled through a minimal number of intermediate reservoir nodes to one another, wherein the minimal number of intermediate reservoir nodes corresponds at most to the square root of the total number of reservoir nodes present.

7. The photonic reservoir computer (91) according to any one of the preceding claims, wherein the reservoir has integrated optics (81, 82) and the integrated optics at least comprise the reservoir nodes (00-24), in particular wherein the integrated optics form a photonic integrated circuit.

8. The photonic reservoir computer (91) according to any one of the preceding claims, wherein the reservoir computer comprises an optical interposer (83), wherein the optical interposer has waveguides (88-90, 92) for coupling the input nodes, reservoir nodes and/or output nodes (00-24).

9. The photonic reservoir computer (91) according to any one of the preceding claims, wherein a plurality of reservoir nodes (00-24) has no optical amplifier, in particular wherein the plurality of reservoir nodes has only passive optical elements.

10. The photonic reservoir computer (91) according to any one of the preceding claims, comprising a plurality of input nodes (04, 13, 15), wherein the input nodes are distributed between the reservoir nodes, in particular wherein the reservoir computer includes a beam splitter (93) and the beam splitter is designed to split an optical input signal to the input nodes (04, 13, 15).

## Revendications

1. Calculateur de réservoir photonique (91), comprenant un ou plusieurs noeuds d'entrée (04, 13, 15), plusieurs noeuds de réservoir (00-24) et un ou plusieurs noeuds de sortie (00, 02, 07, 10, 14), dans lequel les noeuds d'entrée, de réservoir et de sortie (00-24) présentent couplés photoniquement au moyen de guides d'ondes (92, 92b, 92c) dans un maillage de transmission de signaux, **caractérisé en ce qu'**au moins un des guides d'ondes (92b) enjambe ou croise de manière non planaire au moins un autre des guides d'ondes (92c) et/ou au moins un des noeuds de réservoir (00-24).

2. Calculateur de réservoir photonique (91) selon la revendication 1, dans lequel une pluralité de noeuds de réservoir (00-24) présentent respectivement au moins un premier et un deuxième noeuds voisins topologiques connectés au moyen de guides d'ondes, dans lequel le premier noeud voisin topologique est agencé en étant spatialement immédiatement adjacent au noeud de réservoir respectif et dans lequel le deuxième noeud topologique voisin est disposé spatialement à une distance du noeud de réservoir respectif de telle sorte qu'il y ait au moins un noeud intermédiaire entre le noeud de réservoir respectif et le deuxième noeud topologique voisin, dans lequel notamment le noeud intermédiaire n'est pas un noeud topologique voisin du noeud de réservoir respectif.

3. Calculateur de réservoir photonique (91) selon une des revendications précédentes, dans lequel les noeuds de réservoir (00-24) présentent chacun cumulativement entre deux et huit entrées et sorties, notamment dans lequel les noeuds de réservoir (00-24) présentent chacun cumulativement entre trois et cinq entrées et sorties.

4. Calculateur de réservoir photonique (91) selon une des revendications précédentes, dans lequel les noeuds de réservoir (00-24) présentent chacun entre une et cinq entrées et entre une et cinq sorties, notamment dans lequel les noeuds de réservoir présentent chacun entre une et quatre entrées et entre une et quatre sorties, de préférence dans lequel les noeuds de réservoir présentent entre une et trois entrées et entre une et trois sorties, de manière particulièrement préférée dans lequel les noeuds de réservoir présentent deux ou trois sorties.

5. Calculateur de réservoir photonique (91) selon une des revendications précédentes, dans lequel une pluralité de noeuds de réservoir (00-24) présentent chacun deux entrées et deux sorties, notamment dans lequel une des entrées et/ou une des sorties d'un noeud de réservoir est connectée à des noeuds de réservoir spatialement adjacents au moyen de guides d'ondes (92), de préférence dans lequel la deuxième entrée et/ou la deuxième sortie du noeud de réservoir est connectée à des noeuds de réservoir spatialement plus éloignés au moyen de guides d'ondes.

6. Calculateur de réservoir photonique (91) selon une des revendications précédentes, dans lequel les noeuds de réservoir (00-24) sont couplés les uns aux autres par paires directement ou via un nombre minimal de noeuds de réservoir intermédiaires, dans lequel le nombre minimal de noeuds de réservoir intermédiaire correspond au maximum à la racine du nombre total de noeuds de réservoir présents.

7. Calculateur de réservoir photonique (91) selon une des revendications précédentes, dans lequel le calculateur de réservoir présente une optique intégrée (81, 82) et l'optique intégrée comprend au moins les noeuds de réservoir (00-24), en particulier dans lequel l'optique intégrée comprend un circuit de commutation intégré photonique.

8. Calculateur de réservoir photonique (91) selon une des revendications précédentes, dans lequel le calculateur de réservoir comprend un interposeur optique (83), dans lequel les guides d'ondes de l'interposeur optique présente des guides d'ondes (88-90, 92) pour coupler les noeuds d'entrée, de réservoir et/ou de sortie (00-24).

9. Calculateur de réservoir photonique (91) selon une des revendications précédentes, dans lequel une majorité des noeuds de réservoir (00-24) ne comprennent aucun amplificateur optique, en particulier dans lequel la majorité des noeuds de réservoir ne comportent que des éléments optiques passifs.

10. Calculateur de réservoir photonique (91) selon une des revendications précédentes, comprenant une pluralité de noeuds d'entrée (04, 13, 15), dans lequel les noeuds d'entrée sont disposés en étant répartis entre les noeuds de réservoir, notamment dans lequel le calculateur de réservoir présente un séparateur de faisceau (93) et le séparateur de faisceau est conçu pour diviser un signal d'entrée optique entre les noeuds d'entrée (04, 13, 15).
